# EUROPÄISCHE PATENTSCHRIFT

(11) **EP 2 599 672 B1**
(45) Veröffentlichungstag und Bekanntmachung des Hinweises auf die Patenterteilung: **03.04.2019**
(21) Anmeldenummer: 12186825.1
(22) Anmeldetag: 01.10.2012
(51) Int. Cl.: B60S 1/38

(54) **Wischblatt**
Wiper blade
Raclette d'essuie-glace

(30) Priorität: 30.11.2011 DE 102011087441
(43) Veröffentlichungstag der Anmeldung: 05.06.2013
(73) Patentinhaber: ROBERT BOSCH GMBH, 70442 Stuttgart (DE)
(72) Erfinder: Pieters, Eric, 6369 AK Simpelveld (NL)

(56) Entgegenhaltungen:
- EP-A1- 1 889 762
- US-A1- 2010 242 204

## Beschreibung

### Stand der Technik

Die vorliegende Erfindung betrifft ein Wischblatt zum Wischen von Scheiben nach dem Oberbegriff des Anspruchs 1.

Wischblätter zum Wischen von Scheiben, insbesondere von Scheiben von Kraftfahrzeugen, sind bereits bekannt. Das Wischblatt kann eine Wischleiste umfassen, die als Hohlprofil mit einem Längskanal ausgebildet ist, in dem ein federelastisches, bogenförmig ausgebildetes Tragelement als Wischleistenträger angeordnet ist. Durch eine entsprechende Krümmung des Tragelements bei nicht an der Scheibe anliegendem Wischblatt werden Enden der in einem Betriebszustand des Wischblatts vollständig an der Scheibe angelegten Wischleiste durch das dann gespannte Tragelement in Richtung auf die Scheibe belastet. Die Krümmung des Wischblatts muss dabei etwas stärker sein als eine an der zu wischenden Scheibe gemessene stärkste Krümmung. Ein derartiges Wischblatt ist beispielsweise in der DE 198 35 065 A1 beschrieben.

Weitere Wischblätter mit den Merkmalen des Oberbegriffs sind aus der EP 1 889 762 A1 und aus der US 2010/242204 A1 bekannt.

### Offenbarung der Erfindung

Gegenstand der vorliegenden Erfindung ist ein Wischblatt zum Wischen von Scheiben, insbesondere von Scheiben von Kraftfahrzeugen, mit einer an der zu wischenden Scheibe anlegbaren, gummielastischen Wischleiste, die eine Haupterstreckungsrichtung aufweist und im wesentlichen parallel zur Haupterstreckungsrichtung an einer bandartigen, federelastischen Trageinheit gehalten ist, mit einer im Mittelabschnitt der Trageinheit auf einer von der Scheibe abgewandten oberen Fläche angeordneten Anschlussvorrichtung für in Richtung zur Scheibe belastende Gegenanschlussmittel eines zwischen Umkehrlagen bewegbaren Wischerarms. Unter einem "Mittelabschnitt" soll in diesem Zusammenhang insbesondere ein mittleres Drittel einer Länge der Trageinheit in der Haupterstreckungsrichtung verstanden werden.

Es wird vorgeschlagen, dass die Trageinheit zumindest zwei in einem betriebsbereiten Einbauzustand in Richtung zur Scheibe im Wesentlichen parallel beabstandet angeordnete, bandartige, federelastische Tragelemente aufweist. Unter einem "betriebsbereiten Einbauzustand" soll in diesem Zusammenhang insbesondere ein Zustand des Wischblatts verstanden werden, in dem das auslegungsgemäß zusammengebaute Wischblatt an einer dafür vorgesehenen Stelle des Kraftfahrzeugs installiert ist. Unter "im Wesentlichen parallel" soll in diesem Zusammenhang insbesondere verstanden werden, dass in einem betriebsbereiten Zusammenbauzustand des Wischblatts Abweichungen von einer Parallelität der beiden Tragelemente in einer Richtung senkrecht zur Scheibe geringer sind als 30%, bevorzugt geringer als 20% und, besonders bevorzugt, geringer als 10% eines mittleren Abstands der Tragelemente. Unter einem "betriebsbereiten Zusammenbauzustand" soll in diesem Zusammenhang insbesondere ein Zustand des Wischblatts verstanden werden, in dem alle Bestandteile des Wischblatts auslegungsgemäß zusammengebaut sind.

Unter "bandartig" soll in diesem Zusammenhang insbesondere verstanden werden, dass eine Ausdehnung des Tragelements in der Haupterstreckungsrichtung ein Vielfaches, bevorzugt zumindest ein Zwanzigfaches, einer Ausdehnung des Tragelements in einer beliebigen Richtung senkrecht zur Haupterstreckungsrichtung beträgt. Besonders bevorzugt weist das Tragelement in einer Schnittebene senkrecht zur Haupterstreckungsrichtung einen dreieckigen, rechteckförmigen oder trapezförmigen Querschnitt auf.

Bei einer geeigneten Auslegung kann dadurch eine gleichmäßige Verteilung einer im betriebsbereiten Einbauzustand durch den Wischerarm ausgeübten mechanischen Last auf die Wischleiste erreicht werden, so dass entlang der Haupterstreckungsrichtung des Wischblatts eine gleichmäßige Flächenpressung zwischen Wischblatt und Scheibe erzielbar ist. Unter einer "gleichmäßigen Flächenpressung" soll in diesem Zusammenhang insbesondere verstanden werden, dass die Kraft pro Flächeneinheit entlang der Haupterstreckungsrichtung der Wischleiste weniger als 30%, bevorzugt weniger als 20% und besonders bevorzugt weniger als 10% von einem Mittelwert der Kraft pro Flächeneinheit abweicht. Durch die gleichmäßige Flächenpressung zwischen Wischblatt und Scheibe lässt sich ein Umlegevorgang der Wischleiste verbessern, ein Umlegegeräusch der Wischleiste vorteilhaft verringern und Anforderungen an Eigenschaften der verwendeten Materialien hinsichtlich einer plastischen Druckverformung (compression set), insbesondere bei erhöhter Umgebungstemperatur, können vermindert werden, so dass ein kostengünstiges Wischblatt mit verbesserten Andruckeigenschaften bereitgestellt werden kann.

Wenn die zumindest zwei bandartigen, federelastischen Tragelemente in zumindest einem Betriebszustand voneinander verschiedene mechanische Vorbiegungen aufweisen, kann eine gleichmäßige Flächenpressung zwischen Wischblatt und Scheibe auf eine konstruktiv besonders einfache Weise erreicht werden. Unter einer "Vorbiegung des Tragelements" soll in diesem Zusammenhang insbesondere eine Form verstanden werden, die das Tragelement in einem kräftefreien Zustand einnimmt. Durch die federelastische Eigenschaft der Tragelemente sind diese durch Krafteinwirkung elastisch verformbar, so dass sie ohne die Krafteinwirkung selbsttätig in die jeweilige Form ihrer mechanischen Vorbiegung zurückkehren. Die federelastischen Eigenschaften der Tragelemente sind bevorzugt derart bemessen, dass die mechanische Vorbiegung durch Einwirkung einer Kraft von vorteilhaft weniger als 30 N, bevorzugt weniger als 20 N und besonders bevorzugt weniger als 10 N vollständig ausgleichbar ist.

Erfindungsgemäß wird vorgeschlagen, dass die zumindest zwei bandartigen, federelastischen Tragelemente durch verschiedene mechanische Vorbiegungen im Wesentlichen entgegengesetzt gerichtete Krümmungen in der Haupterstreckungsrichtung aufweisen. Unter "entgegengesetzt gerichteten Krümmungen" soll in diesem Zusammenhang insbesondere verstanden werden, dass die Mittelpunkte von zwei gedachten Kreisen, die für die beiden federelastischen Tragelemente eine beste Näherung an deren Geometrie darstellen, auf verschiedenen Seiten der jeweiligen Tragelemente angeordnet ist. Dadurch können durch eine, insbesondere von einem Wischarm ausgeübte, Kraft auf eines der Tragelemente die Krümmungen beider Tragelemente reduziert werden, wobei in Abschnitten der Tragelemente eine besonders gleichmäßige Flächenpressung zwischen Wischblatt und Scheibe erreichbar ist.

Wenn das im betriebsbereiten Einbauzustand näher zur Scheibe angeordnete Tragelement durch die mechanische Vorbiegung eine Krümmung in der Haupterstreckungsrichtung aufweist, die einer Krümmung der Scheibe entgegengesetzt gerichtet ist, lässt sich die von dem Wischarm ausgeübte Kraft in Richtung auf die Scheibe auf konstruktiv besonders einfache Weise in die Tragelemente einleiten, um eine gleichmäßige Flächenpressung zwischen Wischblatt und Scheibe zu erzielen.

Zudem wird vorgeschlagen, dass das näher zur Scheibe angeordnete Tragelement im betriebsbereiten Einbauzustand eine Krümmung aufweist, deren absoluter Betrag um einen vorbestimmten Mindestbetrag geringer ist als ein absoluter Betrag der Krümmung des ferner zur Scheibe angeordneten Tragelements. Unter einem "absoluten Betrag der Krümmung" soll in diesem Zusammenhang insbesondere der absolute Betrag eines Kehrwerts eines Radius des gedachten Kreises verstanden werden, der an das federelastische Tragelement eine beste Näherung an dessen Geometrie darstellt. Dadurch kann bei geeigneter Auslegung eine ausreichend große Flächenpressung zwischen Wischblatt und Scheibe gewährleistet werden.

Des Weiteren wird vorgeschlagen, dass die zumindest zwei bandartigen, federelastischen Tragelemente in zumindest einem ihrer Endbereiche stoffschlüssig miteinander verbunden sind. Unter einem "Endbereich" soll in diesem Zusammenhang insbesondere ein zusammenhängender Längenabschnitt des Tragelements verstanden werden, der ein Ende des Tragelements beinhaltet und in der Haupterstreckungsrichtung eine Länge von weniger 30%, bevorzugt von weniger als 15% und besonders bevorzugt von weniger als 5% einer Gesamtlänge des Tragelements aufweist. Dadurch kann insbesondere an Endbereichen des Wischblatts eine gleichmäßige und zuverlässig reproduzierbare Flächenpressung zwischen Wischblatt und Scheibe erreicht werden. Besonders bevorzugt ist die stoffschlüssige Verbindung durch Schweißen oder durch ein gleichwertiges, dem Fachmann geläufiges Verfahren hergestellt. Grundsätzlich können die zumindest zwei bandartigen, federelastischen Tragelemente an ihren Endbereichen auch einstückig hergestellt sein.

Wenn die zumindest zwei bandartigen, federelastischen Tragelemente im Wesentlichen aus einem der Werkstoffe aus einer Gruppe von Stahl, Aluminium und Kunststoff bestehen, können die Tragelemente mit federelastischen Eigenschaften auf eine besonders einfache und kostengünstige Weise bereitgestellt werden. Unter "im Wesentlichen" soll in diesem Zusammenhang insbesondere verstanden werden, dass die Trageinheit zu mindestens 60%, besonders bevorzugt zu mindestens 70% aus einem der genannten Werkstoffe besteht. Die Trageinheit kann aber auch vollständig, d.h. zu 100%, aus einem der genannten Werkstoffe bestehen. Insbesondere können bei einer Ausbildung der Tragelemente aus Kunststoff dem Fachmann geläufige Formgebungsverfahren wie Spritzguss zur hochpräzisen Herstellung der Vorbiegungen der Tragelemente und gegebenenfalls der stoffschlüssigen Verbindungen der Tragelemente eingesetzt werden.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
Fig. 1 ein erfindungsgemäßes Wischblatt in einem betriebsbereiten Einbauzustand an einem Wischerarm in einer teilgeschnittenen Gesamtansicht von oben,
Fig. 2 eine Schnittansicht eines Details des Wischblatts gemäß der Fig. 1 entlang einer Linie A-A', und
Fig. 3 Tragelemente des Wischblatts gemäß der Fig. 1 in einer losgelösten Anordnung in einer Ansicht wie in Fig. 1.

### Beschreibung des Ausführungsbeispiels

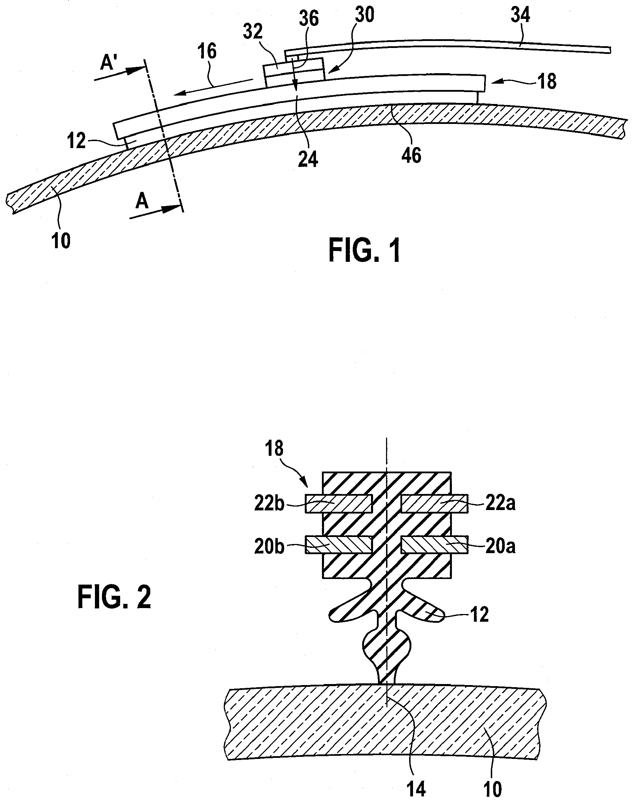

Fig. 1 zeigt ein Wischblatt zum Wischen einer Scheibe 10 eines Kraftfahrzeugs in einer teilgeschnittenen Gesamtansicht von oben. Das Wischblatt weist eine an der zu wischenden Scheibe 10 anlegbare, gummielastische Wischleiste 12 mit einer Haupterstreckungsrichtung 16 auf. Parallel zur Haupterstreckungsrichtung 16 ist die Wischleiste 12 an einer bandartigen, federelastischen Trageinheit 18 gehalten. In einem Mittelabschnitt 24 der Trageinheit 18 ist auf einer von der Scheibe 10 abgewandten oberen Fläche eine Anschlussvorrichtung 30 für in Richtung zur Scheibe 10, senkrecht zur Haupterstreckungsrichtung 16 belastende Gegenanschlussmittel 32 eines zwischen Umkehrlagen bewegbaren Wischerarms 34 angeordnet. Geeignete Anschlussvorrichtungen 30 sind aus dem Stand der Technik bekannt und sollen daher hier nicht näher dargestellt werden. Die Anschlussvorrichtung 30 kann eine Gelenkeinheit zu einer Verstellung einer relativen Lage des Wischblatts in Bezug auf den Wischarm 34 beinhalten. Grundsätzlich kann die Anschlussvorrichtung 30 auch gelenkfrei ausgeführt sein.

Die Trageinheit 18 umfasst vier bandartige, federelastische Tragelemente 20, 22 aus Stahl (Fig. 2), die in einem betriebsbereiten Zusammenbauzustand des Wischblatts zu beiden Seiten einer Symmetrielinie 14 der Wischleiste 12 angeordnet sind, wobei die Paare von Tragelementen 20, 22 in einem betriebsbereiten Einbauzustand des Wischblatts in Richtung zur Scheibe 10 parallel beabstandet sind.

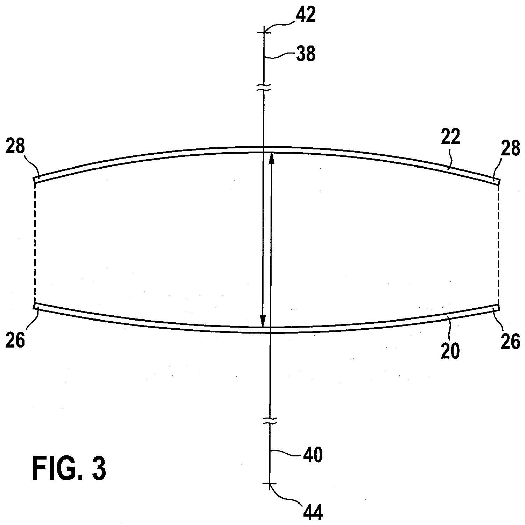

Wie in der Fig. 3 zur Verdeutlichung in übertriebener Weise gezeigt, weisen die Paare von Tragelementen 20, 22 in einem kräftefreien, vom Wischblatt losgelösten Zustand unterschiedliche Vorbiegungen auf. Die aufgrund der Vorbiegungen der Paare von Tragelementen 20, 22 resultierenden Krümmungen lassen sich in ihrer Geometrie durch gedachte Kreisbahnen mit Kreisradien 38, 40 und Kreismittelpunkten 42, 44 annähern. Der Betrag der Krümmung entspricht dann in bekannter Weise einem Kehrwert des Kreisradius. Wie aus der Fig. 3 ersichtlich ist, sind die Kreisradien 38, 40 im Wesentlichen von gleicher Größe. Die Kreismittelpunkte 42, 44 liegen jedoch auf unterschiedlichen Seiten der jeweiligen Paare von Tragelementen 20, 22, so dass die bandartigen, federelastischen Tragelemente 20, 22 durch ihre unterschiedlichen mechanischen Vorbiegungen im Wesentlichen entgegengesetzt gerichtete Krümmungen in der Haupterstreckungsrichtung aufweisen.

Bei der in der Fig. 3 gezeigten Anordnung ist die Krümmung, die durch die mechanische Vorbiegung des im betriebsbereiten Einbauzustand scheibennah angeordneten Paares von Tragelementen 20 in der Haupterstreckungsrichtung erzeugt ist, einer geometrischen Krümmung 46 der Scheibe 10 (Fig. 1) entgegengesetzt. An Endbereichen 26, 28 (links und rechts in Fig. 3) der Tragelemente 20, 22 sind diese durch Schweißverbindungen stoffschlüssig miteinander verbunden (angedeutet in Fig. 3 durch gestrichelte Linien), wodurch eindeutige und reproduzierbare Krafteinleitungsstellen definiert sind. Eine von dem Wischerarm 34 im betriebsbereiten Einbauzustand der Fig. 1 ausgeübte Kraft 36 auf den Mittelabschnitt 24 der Trageinheit 18 und somit auf das scheibenferne Paar von Tragelementen 22 bewirkt durch Einleitung in die Endbereiche 26, 28 der scheibennah angeordneten Tragelemente 20 eine Reduzierung von deren durch die mechanische Vorbiegung hervorgerufenen Krümmungen.

Die durch die mechanische Vorbiegung erzeugte Krümmung des im Einbauzustand scheibennah angeordneten Paares von Tragelementen 20 in der Haupterstreckungsrichtung ist so gewählt, dass ihr absoluter Betrag um einen vorbestimmten Mindestbetrag geringer ist als ein absoluter Betrag der Krümmung der scheibenfern angeordneten Tragelemente 22. Bei Einwirken der von dem Wischerarm 34 im betriebsbereiten Einbauzustand in Richtung der Scheibe 10 ausgeübten Kraft 36 ist die Krümmung der Paare von Tragelementen 20, 22 etwas größer als die Krümmung 46 der Scheibe 10, wodurch gewährleistet ist, dass die Endbereiche 26, 28 der Tragelemente 20, 22 in erforderlicher Weise an der Scheibe 10 anliegen.

Durch eine teilweise Kompensation der durch die mechanischen Vorbiegungen erzeugten Krümmungen der Paare von Tragelementen 26, 28 durch die von dem Wischerarm 34 erzeugte Kraft 36 in Richtung der Scheibe 10 resultiert eine Krümmung der Wischleiste 12, die geringfügig größer ist als die Krümmung 46 der Scheibe 10 und die als Ergebnis einer Kompensation von entgegengesetzten Kräften sowohl im Mittelabschnitt 24 der Trageinheit 18 als auch in den Endbereichen 26, 28 der Tragelemente 20, 22 eine stabile Lage einnimmt, wodurch eine gleichmäßige Flächenpressung zwischen Wischleiste 12 und Scheibe 10 erzielt wird.

## Patentansprüche

1. Wischblatt zum Wischen von Scheiben (10), insbesondere von Scheiben (10) von Kraftfahrzeugen, mit einer an der zu wischenden Scheibe (10) anlegbaren, gummielastischen Wischleiste (12), die eine Haupterstreckungsrichtung (16) aufweist und im Wesentlichen parallel zur Haupterstreckungsrichtung (16) an einer bandartigen, federelastischen Trageinheit (18) gehalten ist, mit einer im Mittelabschnitt (24) der Trageinheit (18) auf einer von der Scheibe (10) abgewandten oberen Fläche angeordneten Anschlussvorrichtung (30) für in Richtung zur Scheibe (10) belastende Gegenanschlussmittel (32) eines zwischen Umkehrlagen bewegbaren Wischerarms (34), wobei die Trageinheit (18) zumindest zwei in einem betriebsbereiten Einbauzustand in Richtung zur Scheibe (10) im Wesentlichen parallel beabstandet angeordnete, bandartige, federelastische Tragelemente (20, 22) aufweist, **dadurch gekennzeichnet, dass** die zumindest zwei bandartigen, federelastischen Tragelemente (20, 22) durch verschiedene mechanische Vorbiegungen im Wesentlichen entgegengesetzt gerichtete Krümmungen in der Haupterstreckungsrichtung aufweisen.

2. Wischblatt nach Anspruch 1, **dadurch gekennzeichnet, dass** die zumindest zwei bandartigen, federelastischen Tragelemente (20, 22) in zumindest einem Betriebszustand voneinander verschiedene mechanische Vorbiegungen aufweisen.

3. Wischblatt nach Anspruch 1 oder 2, Wischblatt nach einem der vorhergehenden Ansprüche, **dadurch gekennzeichnet, dass** das im betriebsbereiten Einbauzustand näher zur Scheibe (10) angeordnete Tragelement (20) durch die mechanische Vorbiegung eine Krümmung in der Haupterstreckungsrichtung aufweist, die einer Krümmung (46) der Scheibe (10) entgegengesetzt gerichtet ist.

4. Wischblatt zumindest nach Anspruch 1, **dadurch gekennzeichnet, dass** das näher zur Scheibe (10) angeordnete Tragelement (20) im betriebsbereiten Einbauzustand eine Krümmung in der Haupterstreckungsrichtung aufweist, deren absoluter Betrag um einen vorbestimmten Mindestbetrag geringer ist als ein absoluter Betrag der Krümmung des ferner zur Scheibe (10) angeordneten Tragelements (22).

5. Wischblatt nach einem der vorhergehenden Ansprüche, **dadurch gekennzeichnet, dass** die zumindest zwei bandartigen, federelastischen Tragelemente (20, 22) in zumindest einem ihrer Endbereiche (26, 28) stoffschlüssig miteinander verbunden sind.

6. Wischblatt nach einem der vorhergehenden Ansprüche, **dadurch gekennzeichnet, dass** die zumindest zwei bandartigen, federelastischen Tragelemente (20, 22) im Wesentlichen aus einem der Werkstoffe aus einer Gruppe von Stahl, Aluminium und Kunststoff besteht.

## Claims

1. Wiper blade for wiping windows (10), in particular windows (10) of motor vehicles, with a rubber-elastic wiper strip (12) which can be placed against the window (10) to be wiped and which has a main direction of extent (16) and is held substantially parallel to the main direction of extent (16) on a strip-like, spring-elastic supporting unit (18), with a connection device (30), which is arranged in the central portion (24) of the supporting unit (18) on an upper surface facing away from the window (10), for mating connection means (32), which bring about a load in the direction of the window (10), of a wiper arm (34), which is movable between reversing positions, wherein the supporting unit (18) has at least two strip-like, spring-elastic supporting elements (20, 22) which, in an operationally ready installation state, are arranged spaced apart substantially parallel in the direction of the window (10), **characterized in that** the at least two strip-like, spring-elastic supporting elements (20, 22) have substantially oppositely directed curvatures in the main direction of extent because of various mechanical preliminary deflections.

2. Wiper blade according to Claim 1, **characterized in that** the at least two strip-like, spring-elastic supporting elements (20, 22) have mechanical preliminary deflections which are different from each other in at least one operating state.

3. Wiper blade according to Claim 1 or 2, wiper blade according to one of the preceding claims, **characterized in that** the supporting element (20) which, in the operationally ready installation state, is arranged closer to the window (10) has, because of the mechanical preliminary deflection, a curvature in the main direction of extent that is oppositely directed to a curvature (46) of the window (10).

4. Wiper blade at least according to Claim 1, **characterized in that**, in the operationally ready installation state, the supporting element (20) arranged closer to the window (10) has a curvature in the main direction of extent, the absolute value of which is smaller by a predetermined minimum value than an absolute value of the curvature of the supporting element (22) furthermore arranged with respect to the window (10).

5. Wiper blade according to one of the preceding claims, **characterized in that** the at least two band-like, spring-elastic supporting elements (20, 22) are connected to each other in an integrally bonded manner in at least one of their end regions (26, 28).

6. Wiper blade according to one of the preceding claims, **characterized in that** the at least two band-like, spring-elastic supporting elements (20, 22) are essentially composed of one of the materials from a group consisting of steel, aluminium and plastic.

## Revendications

1. Balai d'essuie-glace pour essuyer des vitres (10), en particulier des vitres (10) de véhicules automobiles, comprenant une raclette de balai d'essuie-glace (12) ayant l'élasticité du caoutchouc, pouvant être appliquée contre la vitre à essuyer (10), qui présente une direction d'étendue principale (16) et qui est retenue essentiellement parallèlement à la direction d'étendue principale (16) contre une unité de support élastique à ressort de type bande (18), avec un dispositif de raccordement (30) disposé dans la portion centrale (24) de l'unité de support (18) sur une surface supérieure opposée à la vitre (10), pour des moyens de raccordement conjugués (32), exerçant une sollicitation dans la direction de la vitre (10), d'un bras d'essuie-glace (34) déplaçable entre des positions d'inversion, l'unité de support (18) présentant au moins deux élément de support élastiques à ressort de type bande (20, 22), disposés de manière espacée essentiellement parallèlement dans un état d'installation prêt au fonctionnement dans la direction de la vitre (10), **caractérisé en ce que** les au moins deux éléments de support élastiques à ressort de type bande (20, 22) présentent des courbures orientées essentiellement en sens inverse dans la direction d'étendue principale, du fait de précintrages mécaniques différents.

2. Balai d'essuie-glace selon la revendication 1, **caractérisé en ce que** les au moins deux éléments de support élastiques à ressort de type bande (20, 22) présentent, dans au moins un état de fonctionnement, des précintrages mécaniques différents l'un de l'autre.

3. Balai d'essuie-glace selon la revendication 1 ou 2, balai d'essuie-glace selon l'une quelconque des revendications précédentes, **caractérisé en ce que** l'élément de support (20) disposé plus près de la vitre (10) dans l'état d'installation prêt au fonctionnement présente, du fait du précintrage mécanique, une courbure dans la direction d'étendue principale qui est orientée à l'opposé d'une courbure (46) de la vitre (10).

4. Balai d'essuie-glace selon au moins la revendication 1, **caractérisé en ce que** l'élément de support (20) disposé plus près de la vitre (10) dans l'état d'installation prêt au fonctionnement présente une courbure dans la direction d'étendue principale dont la valeur absolue est inférieure, d'une valeur minimale prédéterminée, à une valeur absolue de la courbure de l'élément de support (22) disposé plus loin de la vitre (10).

5. Balai d'essuie-glace selon l'une quelconque des revendications précédentes, **caractérisé en ce que** les au moins deux éléments de support élastiques à ressort de type bande (20, 22) sont connectés l'un à l'autre par liaison de matière dans au moins l'une de leurs régions d'extrémité (26, 28).

6. Balai d'essuie-glace selon l'une quelconque des revendications précédentes, **caractérisé en ce que** les au moins deux éléments de support élastiques à ressort de type bande (20, 22) se composent essentiellement d'un matériau appartenant au groupe contenant l'acier, l'aluminium et le plastique.
